Europäisches Patentamt

European Patent Office

Office européen des brevets

(11) Veröffentlichungsnummer: **0 283 842 B1**

## (12) EUROPÄISCHE PATENTSCHRIFT

(45) Veröffentlichungstag der Patentschrift: **03.06.92**

(51) Int. Cl.5: **H02M 3/335**

(21) Anmeldenummer: **88103635.4**

(22) Anmeldetag: **08.03.88**

(54) **Umrichterschaltung mit einem Eintakt-Sperrumrichter.**

(30) Priorität: **27.03.87 DE 3710181**

(43) Veröffentlichungstag der Anmeldung:
**28.09.88 Patentblatt 88/39**

(45) Bekanntmachung des Hinweises auf die
Patenterteilung:
**03.06.92 Patentblatt 92/23**

(84) Benannte Vertragsstaaten:
**AT CH DE FR GB IT LI NL**

(56) Entgegenhaltungen:
**EP-A- 0 178 343**
**FR-A- 2 443 763**

**EDN MAGAZINE, Band 26, Nr. 3, Februar
1981, Seiten 95-108, Boston, Mass., US; E.R.
TEJA: "The latest switchers allow you to
take advantage of their low cost and small
size in a wider variety of applications than
ever"**

(73) Patentinhaber: **SIEMENS AKTIENGESELL-
SCHAFT**
**Wittelsbacherplatz 2**
**W-8000 München 2(DE)**

(72) Erfinder: **Kupka, Detlef, Dipl.-Ing. (FH)**
**Einsteinstrasse 12**
**W-8033 Martinsried(DE)**

## Beschreibung

Die Erfindung bezieht sich auf eine wie im Oberbegriff des Patentanspruchs 1 angegebene Umrichterschaltung mit einem Eintakt-Sperrumrichter. Diese Umrichterschaltung enthält einen Regler, der die Ausgangsspannung des Sekundärkreises direkt oder indirekt regelt. Dabei kann ein dem Regler zugeführter Istwert die Ausgangsspannung des Sekundärkreises sein oder die Ausgangsspannung eines dem Sekundärkreis nachgebildeten Hilfskreises, der an eine Hilfswicklung des Transformators angeschlossen ist. Mit Hilfe der Ausgangsspannung des Hilfskreises, die der Leerlaufspannung proportional ist, ergibt sich eine sogenannte EMK-Regelung. Die EMK-Regelung hat den Vorteil, daß die galvanische Trennung von Sekundärkreis und Regler mit Hilfe des Transformators realisiert ist.

Zur Speisung von Nachrichtenübertragungssystemen werden Stromversorgungsgeräte benötigt, die in der Regel mehrere Ausgangsspannungen unterschiedlicher Größe und Polarität mit engen Toleranzen zwischen Leerlauf und Vollast liefern sollen. Diese Stromversorgungsgeräte werden in vielen Fällen nach den bekannten Prinzipien als Durchflußumrichter oder Sperrumrichter ausgeführt.

Aus H. Gummhalter: "Stromversorgungssysteme der Kommunikationstechnik", Teil 1 Grundlagen, Seite 215 - 223, Siemens AG, 1983 ist es bereits bekannt, Gleichstromumrichter als Eintakt-Durchflußumrichter oder als Eintakt-Sperrumrichter auszubilden.

Bei dem bekannten Eintakt-Durchflußumrichter fällt die Energieaufnahme auf der Primärseite zeitlich mit der Energieabgabe auf der Sekundärseite zusammen.

Während der Leitphase des Transistors fließt primär Strom. Da die Primärwicklung und die Sekundärwicklung den gleichen Wicklungssinn haben, fließt zur gleichen Zeit sekundär über die leitende Diode und die Drossel zur Last Strom, so daß der Glättungskondensator des Sekundärkreises geladen wird. Bei diesem Vorgang speichert die im Sekundärkreis angeordnete Glättungsdrossel Energie. Während der Sperrphase des Schalttransistors ist die Stromzufuhr in den Sekundärkreis unterbrochen. Die Drossel gibt über die Freilaufdiode bis zum Ende der Periode Energie zur Last ab und der Glättungskondensator wird entladen. Eine Vorrichtung zur Regelung und Steuerung schaltet den Transistor in einer Periode solange durchlässig, daß bei schwankender Eingangsspannung und/oder veränderlicher Last die Ausgangsgleichspannung konstant gehalten wird. Damit der Transformator nicht in die Sättigung gelangt, ist z.B. eine Entmagnetisierungswicklung vorhanden. Während der Sperrphase des Schalttransistors fließt über eine in Serie zur Entmagnetisierungswicklung liegende Diode und die Entmagnetisierungswicklung Strom in umgekehrter Richtung und bereitet so den Transformator für die nächste Leitphase vor.

Bei dem bekannten Eintakt-Sperrumrichter sind Energieaufnahme und Energieabgabe zeitlich versetzt. Während der Leitphase des Schalttransistors fließt Strom nur durch die Primärwicklung des Transformators, denn Primär-und Sekundärwicklung haben entgegengesetzten Wicklungssinn. Damit ist in der Leitphase des Schalttransistors die im Ausgangskreis liegende Diode in Sperrichtung gepolt, so daß kein Strom über die Sekundärwicklung fließt. Die Last wird ausschließlich aus einem im Ausgangskreis liegenden Glättungskondensator gespeist.

In der Sperrphase des Schalttansistors schwingt die Polarität der Spannung am Transformator um. Damit wird die im Ausgangskreis liegende Diode leitend. Die während der Leitphase im Transformator gespeicherte Energie wird an die Last abgegeben. Zugleich wird der Glättungskondensator von neuem geladen.

Man kann Gleichstromumrichter, mit deren Hilfe mehrere Ausgangsspannungen erzeugt werden, mit einer EMK-Regelung versehen und in wenigstens einem Teil der Ausgangskreise Nachregler vorsehen. Bei der bekannten EMK-Regelung wird als Istwert die Ausgangsspannung einer Hilfswicklung des Transformators abgegriffen und in der Regelung und Steuerung mit dem einzigen Sollwert eines gemeinsamen Sollwertgebers verglichen. Die Beschaltung dieser Hilfswicklung ist die gleiche, wie bei den Sekundärwicklungen für die Ausgangsspannungen.

Aus Fig. 3 der europäischen Patentanmeldung EP-0 178 343 ist ein Umrichter bekannt, der als Gegentakt-Umrichter ausgeführt ist. Bei dem bekannten Umrichter werden Eingangstransistoren in Abhängigkeit von der Ausgangsspannung eines Hauptausgangskreises geschaltet. Der Transistor eines zweiten Sekundärkreises wird in Abhängigkeit von der zweiten Ausgangsspannung gesteuert.

Ferner sind aus dem Dokument EDN MAGAZINE, Band 26, Nr. 3, Februar 1981, Seiten 95-108, Boston, Mass., US; E.R. TEJA: "The latest switchers allow you to take advantage of their low cost and small size in a wider variety of applications than ever" Schaltungen mit mehreren Sekundärkreisen bekannt, bei denen mindestens ein Sekundärkreis separat geregelt und der Hauptschalter von der Spannung eines weiteren Sekundärkreises gesteuert wird. Diese bekannten Schaltungen sind als Durchflußwandler ausgeführt.

Weiterhin ist aus der europäischen Patentanmeldung EP-0 196 907 ein Umrichter mit mehreren Sekundärkreisen bekannt, von denen wenigstens einer nach dem Sperrwandler-Prinzip und ein zusätzlicher nach dem Durchflußwandler-Prinzip arbeitet. Ein Sperrwandler-Sekundärkreis dient als Hauptsekundärkreis, liefert den Istwert für einen Hauptregler und ist mit dem zusätzlichen Sekundärkreis ausgangsseitig zusammengeführt. Der zusätzliche Sekundärkreis liefert nach dem Durchflußumrichter-Prinzip, über ein Stellglied gesteuert, zusätzlich Strom an den Hauptausgang. Das Stellglied des zusätzlichen Sekundärkreises wird von einem oder mehreren weiteren Sperrwandler-Sekundärkreisen gesteuert.

Aufgabe der Erfindung ist es, eine wie im Oberbegriff des Patentanspruchs 1 angegebene Umrichterschaltung mit einem Eintakt-Sperrumrichter derart auszubilden, daß sie mehrere Ausgangskreise mit wesentlich unterschiedlichen Spannungen aufweist und dabei mit einem vergleichsweise geringen Aufwand für die Nachregelung auskommt.

Gemäß der Erfindung wird die Umrichterschaltung zur Lösung dieser Aufgabe in der im kennzeichnenden Teil des Patentanspruchs 1 angegebenen Weise ausgebildet. Die Gleichrichterdiode und der steuerbare Schalter können dabei im selben oder in verschiedenen Längszweigen angeordnet sein. Der steuerbare Schalter kann insbesondere ein Halbleiterschalter, vorzugsweise ein Leistungsfeldeffekttransistor sein.

Durch diese Maßnahmen ergibt sich in vorteilhafter Weise eine Umrichterschaltung, die für wenigstens einen Ausgangskreis mit relativ großer Ausgangsspannung die Vorteile eines Sperrumrichters und für wenigstens einen Ausgangskreis mit vergleichsweise kleiner Ausgangsspannung die Vorteile eines Durchflußumrichters hat. Insbesondere kommt die Umrichterschaltung in den weiteren Sekundärkreisen ohne großvolumige Speicherkondensatoren aus.

Die weitere Ausgestaltung der Erfindung nach Anspruch 2 hat den Vorteil, daß der Aufwand des schaltenden Nachreglers besonders gering ist. Insbesondere werden weder Taktgeber noch Pulsbreitenmodulator benötigt. Dieser Vorteil fällt besonders dann ins Gewicht, wenn die Umrichterschaltung zusätzlich zu einem Ausgang mit vergleichsweise großer Spannung mehrere mit Nachreglern versehene Ausgänge für relativ kleine Spannungen und/ oder vergleichsweise große Ströme aufweist.

Bei den weiteren, mit Nachreglern versehenen Sekundärkreisen kann der Wickelsinn der betreffenden Sekundärwicklung des Transformators beliebig sein.

Die Erfindung wird anhand der in den Figuren dargestellten Ausführungsbeispiele näher erläutert. Es zeigen

FIG 1    eine Umrichterschaltung mit einem Eintakt-Sperrumrichter, der zwei zusätzliche Sekundärkreise mit je einem schaltenden Nachregler aufweist und

FIG 2    zwei für die Umrichterschaltung nach FIG 1 geeignete Transduktor-Nachregler.

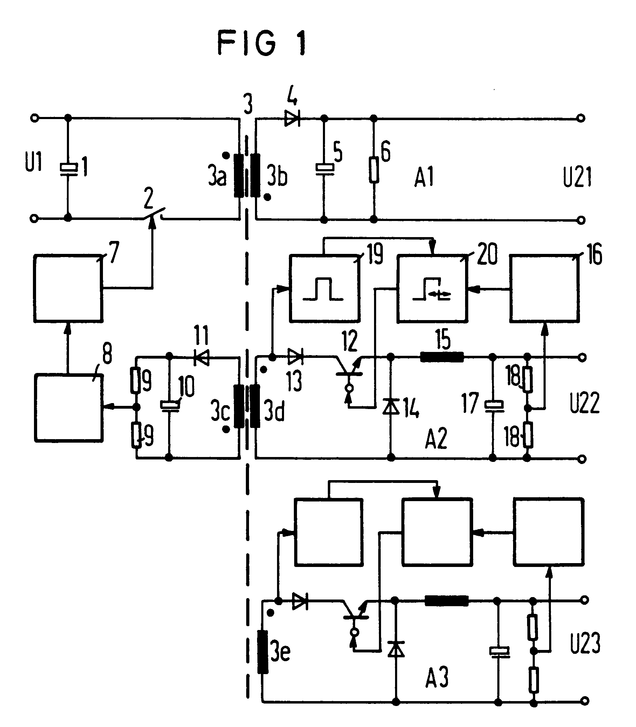

Die in FIG 1 gezeigte Umrichterschaltung wird mit der Eingangsspannung U1 gespeist. Der an der Eingangsspannung U1 liegende Kondensator 1 ist über den elektronischen Schalter 2 mit der Primärwicklung 3a des Transformators 3 verbunden. Parallel zur ersten Sekundärwicklung 3b des Transformators 3 liegt eine aus der Diode 4 und dem Ladekondensator 5 bestehende Serienschaltung. Parallel zum Ladekondensator 5 liegt als Grundlast der Widerstand 6 und der Ausgang für die erste Ausgangsspannung U21.

Der Transformator 3 mit dem genannten Primärkreis 3a und dem ersten Sekundärkreis 3b bildet einen Sperrumrichter. Dieser Sperrumrichter ist mit einer Anordnung zur EMK-Regelung versehen. Die Regelanordnung enthält einen an die Hilfswicklung 3c des Transformators 3 angeschlossenen Hilfskreis, der dem ersten Sekundärkreis nachgebildet ist. Der Hilfskreis enthält die aus der Diode 11 und dem Ladekondensator 10 bestehende und an die Hilfswicklung 3c angeschlossene Serienschaltung. Parallel zum Kondensator 10 liegt der Spannungsteiler 9. Mit Hilfe des Spannungsteilers 9 wird eine der Leerlaufspannung des Sperrumrichters proportionale Hilfsspannung erzeugt.

Im Regler 8 wird aus einer Referenzspannung und der Hilfsspannung eine der Regelabweichung entsprechende Größe gebildet und dem Pulsbreitenmodulator 7 zugeführt. Der Pulsbreitenmodulator 7 steuert den elektronischen Schalter 2 derart, daß die EMK-bzw. Leerlaufspannung des Sperrumrichters wenigstens näherungsweise auf einem konstanten Wert gehalten wird. Die EMK-Regelung ist für den Ausgangskreis A1 optimiert.

Abweichend von FIG 1 kann gegebenenfalls eine Regelung vorgesehen sein, die als Istwert die auf auf einen konstanten Wert zu regelnde Ausgangsspannung U21 verwendet.

Die Umrichterschaltung ist mit mehreren weiteren Sekundärkreisen A2 und A3 versehen. Diese Sekundärkreise enthalten jeweils einem schaltenden Nachregler, der die Ausgangsspannung U22 bzw. U23 des Sekundärkreises auf einem konstanten Wert regelt.

Bei dem Sekundärkreis A2 ist an die weitere Sekundärwicklung 3d eine Serienschaltung aus der Gleichrichterdiode 13, dem Transsistor 12 und der dazu mit entgegengesetzter Polung in Serie geschalteten Freilaufdiode 14 angeschlossen. Parallel zur Freilaufdiode 14 liegt die aus der Drossel 15 und dem Kondensator 17 bestehende Siebschaltung. Parallel zum Kondensator 17 liegen der Ausgang für die weitere Ausgangsspannung U22 und der Spannungsteiler 18. Der Abgriff des Spannungsteilers 18 ist an den Regler 16 geführt. Der Regler 16 steuert über den Pulsbreitenmodulator 20 den Transistor 12. Der Pulsbreitenmodulator 20 wird von Taktgeber 19, der an die Sekundärwicklung 3d angeschlossen ist, synchronisiert.

Der an die weitere Sekundärwicklung 3e angeschlossene Sekundärkreis A3 zur Erzeugung der Ausgangsspannung U23 ist in gleicher Weise aufgebaut wie der Sekundärkreis A2.

Bei einer bevorzugten Ausführungsform betragen die Ausgangsspannungen und die zugehörigen Ausgangsströme
U21 = 95 V/ 0,6 A und
U22 = +5 V/ 2 A sowie eine weitere Ausgangsspannung
-5 V/ 0,5 A.

Für die hohe Spannung U21 stellt die Umrichterschaltung einen Sperrumrichter dar. Der Wicklungssinn der weiteren Sekundärrichtungen 3d und 3e ist so gewählt, daß die Umrichterschaltung für die beiden kleineren Spannungen dagegen in der Durchflußphase arbeitet.

Durchflußumrichter eignen sich besonders zur Erzeugung kleiner Ausgangsspannungen, z.B. 2 V ... 15 V bei großen Lastströmen. Der Nachteil des Durchflußumrichter-Prinzips gegenüber dem des Sperrumrichters liegt darin, daß neben dem Übertrager pro Ausgangskreis zwei Gleichrichter, eine Siebdrossel, ein Siebkondensator und eine Grundlast benötigt werden.
Ferner muß die Abmagnetisierung des Übertragers z.B. durch eine RCD-Beschaltung oder andere Maßnahmen sichergestellt sein.
Vorteilhaft bei großen Strömen ist die dauernd stromdurchflossene Siebdrossel, die den Effektivstrom im Kondensator klein hält.
Bis zu Toleranzen von etwa +5 % kommt man meist mit einer gemeinsamen EMK-Regelung aus. Bei kleineren Toleranzen und/oder bei mehreren Ausgangskreisen mit kleinen Spannungen, z.B. 5 V muß jedoch nachgeregelt werden, da die Streuung der Schwellspannung der Gleichrichter etc. den Gleichlauf zu stark beeinflussen.

Sperrumrichter eignen sich besonders zur Erzeugung hoher Ausgangsspannungen von z.B. etwa 100 V und mehr bei kleinen Lastströmen.

Der Vorteil des Sperrumrichter-Prinzips ist es, daß nur ein magnetisches Bauteil als Speicherübertrager und pro Ausgangskreis ein Gleichrichter, ein Ladekondensator und eine Grundlast benötigt werden. Die Abmagnetisierung des Übertragers erfolgt auf die Ausgangskreise und benötigt keinen zusätzlichen Schaltungsaufwand.
Nachteilig kann sich bei großen Strömen auswirken, daß wegen der hohen effektiven Belastung Kondensatoren mit großer Bauform verwendet werden müssen.

Die Umrichterschaltung nach FIG 1 kann somit als Sperr-Durchfluß-Umrichter bezeichnet werden.

Dieser Sperr-Durchfluß-Umrichter bietet die Vorteile beider Grundschaltungen. In der Sperrphase wird die Spannung U21 erzeugt und mit Hilfe der EMK-Regelung konstant gehalten, in der Durchfluß-Phase die beiden kleineren Spannungen U22 und U23. Da die Abmagnetisierung des Transformators 3 auf den Ausgangskreis A1 erfolgt, sind für die weiteren Sekundärkreise A2 und A3 die bei Durchflußumrichtern an sich erforderlichen besonderen Maßnahmen zur Abmagnetisierung in vorteilhafter Weise nicht erforderlich.

Weil die Tastgrad-Änderungen des geregelten Sperrumrichters abhängig von der Versorgungsspannung U1 immer kleiner ist als die Tastgrad-Änderung eines entsprechenden Durchflußumrichters, würden die Spannungen U22 und U23 Kreise ohne Nachregelung bei einer Verdoppelung der Versorgungsspannung U1 um theoretisch 33 % bei einem maximalen Tastgrad $\gamma_{max}$ = 0,7 bzw. 50 % bei $\gamma_{max.}$ = 0,5 ansteigen. Mit je einem schaltenden Nachregler werden diese Spannungsänderungen bei gutem Wirkungsgrad problemlos ausgeregelt. Der Sperr-Durchfluß-Umrichter hat den weiteren Vorteil, daß für die Ausgangskreise A2 und A3 keine voluminösen Ladekondensatoren erforderlich sind.

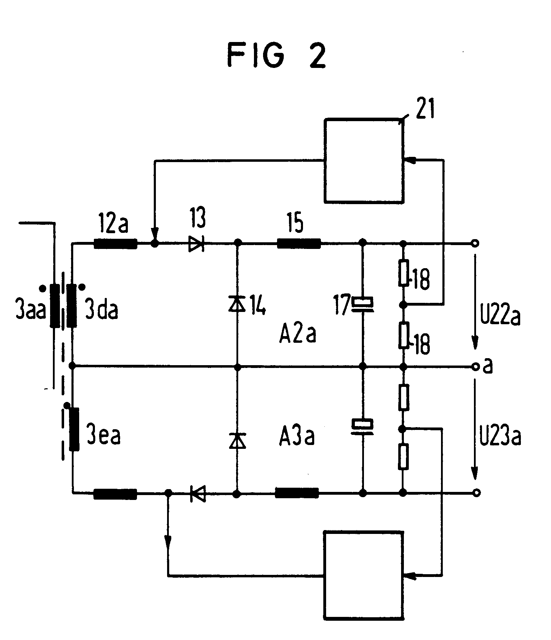

FIG 2 zeigt für eine Umrichterschaltung nach FIG 1 zwei weitere Sekundärkreise A2a und A3a, die jeweils als gesteuerten Schalter anstelle des Transistors 12 einen Transduktor 12a aufweisen. Der Transduktor 12a wird vom Regler 21 mit einem Gleichstrom gesteuert. Dieser Strom steuert die Spannungszeitfläche, nach der die Spannung am Transduktor zusammenbricht, so daß der Transduktor praktisch durchschaltet. Da der Regler 21 in Abhängigkeit von der Regelabweichung den Steuerstrom als analoge Größe bildet, ist der Taktgeber 19 und der Impulsbreitenmodulator 20 nach FIG 1 nicht erforderlich, so daß sich ein besonders geringer Steueraufwand ergibt. Ein weiterer Vorteil besteht darin, daß die beiden Sekundärwicklungen 3da und 3ea nicht galvanisch voneinander getrennt zu sein brauchen, da die beiden Regler die zugeordneten Transduktoren mit einem Gleichstrom steuern.

Die beiden Sekundärwicklungen 3da und 3ea liegen mit gleichem Wicklungssinn in Serie. Der Verbindungspunkt zwischen den Sekundärwicklungen 3da und 3da ist unmittelbar an einen Anschluß a geführt, der den beiden Ausgängen gemeinsam ist, an dem die Ausgangsspannungen U22a und U23a zur Verfügung stehen. Bezogen auf den Anschluß a sind die Ausgangsspannungen U22a und U23a entgegengesetzt gerichtet.

**Patentansprüche**

1. Umrichterschaltung mit einem Eintakt-Sperrumrichter mit mehreren Sekundärkreisen (A1, A2, A3), bei dem in einem Primärkreis eine Primärwicklung (3a) eines Transformators über einen elektronischen Schalter an eine Gleichspannungsquelle angeschlossen und in einem Sekundärkreis (A1) eine Sekundärwicklung (3b) über einen Gleichrichter (4) an einen Speicher-Kondensator (5) geführt ist, der an einem ersten Speiseausgang liegt, wobei ein Steuereingang des elektronischen Schalters an einen durch einen ersten Regler (8) steuerbaren Impulsbreitenmodulator (7) angeschlossen ist und die Istwertspannung für den ersten Regler von einem Sperrwandler-Sekundärkreis (A1, 3c) geliefert wird

**dadurch gekennzeichnet,**

daß wenigstens ein an eine weitere Sekundärwicklung (3d 3e) des Transformators (3) angeschlossener weiterer Sekundärkreis (A2, A3) zur Erzeugung einer gegenüber der Ausgangsspannung des einen Sekundärkreises kleineren Spannung vorgesehen ist, der in einen Längszweig eine Gleichrichter-Diode (13) und einen Schalter (12) enthält, der durch einen die Ausgangsspannung des weiteren Sekundärkreises (A2, A3) regelnden zweiten Regler (16) steuerbar ist und in einem Querzweig eine Freilaufdiode (14) enthält, und daß bei dem weiteren Sekundärkreis (A2, A3) an die Freilaufdiode (14) ein LC-Glied (15, 17) angeschlossen ist, dessen Kondensator (17) einen weiteren Ausgang der Umrichterschaltung bildet, und daß die beiden Dioden (13, 14) des weiteren Sekundärkreises (A2, A3) jeweils derart gepolt sind, daß sie mit gleichnamigen Anschlüssen unmittelbar (Fig. 2) oder mittelbar (Fig. 1) zusammengeführt sind und daß der Wickelsinn der weiteren Sekundärwicklung (3d, 3e; 3da, 3ea) jeweils derart gewählt ist, daß der weitere Ausgangskreis zusammen mit dem Primärkreis des Sperrumrichters eine Anordnung nach Art eines Durchflußumrichters bildet.

2. Umrichterschaltung nach Anspruch 1,
   **dadurch gekennzeichnet,**
   daß der steuerbare Schalter (12) als Transduktor ausgebildet ist.

## Claims

1. Converter circuit having a single-ended flyback converter with a plurality of secondary circuits (A1, A2, A3), in which flyback converter, in a primary circuit, a primary winding (3a) of a transformer is connected via an electronic switch to a DC voltage source and, in one secondary circuit (A1), a secondary winding (3b) is connected via a rectifier (4) to a storage capacitor (5) which is connected to a first supply output, a control input of the electronic switch being connected to a pulse width modulator (7) which can be controlled by a first controller (8), and the actual voltage value of the first controller being supplied by a flyback converter secondary circuit (A1, 3c), characterised in that at least one further secondary circuit (A1, A3), connected to a further secondary winding (3d, 3e) of the transformer (3) is provided for generating a voltage which is smaller in comparison with the output voltage of the one secondary circuit, which secondary circuit contains, in a series path, a rectifier diode (13) and a switch (12), which switch (12) can be controlled by a second controller (16) controlling the output voltage of the further secondary circuit (A1, A3), and contains in a parallel path, a freewheeling diode (14), and in that, in the case of the further secondary circuit (A1, A3), connected to the freewheeling diode (14) is an LC element (15, 17) whose capacitor (17) forms a further output of the converter circuit, and in that the two diodes (13, 14) of the further secondary circuit (A1, A3) are in each case connected in such polarity that their like terminals are joined together directly (Fig. 2) or indirectly (Fig. 1), and in that the winding direction of the further secondary winding (3d, 3e; 3da, 3ea) is selected in each case in such a manner that the further output circuit, together with the primary circuit of the flyback converter, forms an arrangement in the manner of a forward converter.

2. Converter circuit according to Claim 1, characterised in that the controllable switch (12) is constructed as a transductor.

## Revendications

1. Circuit convertisseur statique comportant un convertisseur de blocage monophasé possédant plusieurs circuits secondaires (A1,A2,A3) et dans lequel, dans un circuit primaire, un enroulement primaire (3a) d'un transformateur est raccordé par l'intermédiaire d'un interrupteur électronique à une source de tension continue et, dans un circuit secondaire (1), un enroulement secondaire (3b) est raccordé par l'intermédiaire d'un redresseur (4) à un condensateur d'accumulation d'énergie (5), qui est raccordé à une première sortie d'alimentation, une entrée de commande de l'interrupteur électronique étant raccordée à un modulateur d'impulsions en durée (7) pouvant être commandé par un premier régulateur (8) et la tension réelle pour le premier régulateur est délivrée par un circuit secondaire (A1,3C) du convertisseur de blocage,
caractérisé par le fait
que pour la production d'une tension inférieure à la tension de sortie du premier circuit secondaire, il est prévu au moins un autre circuit secondaire (A2,A3) raccordé à un autre enroulement secondaire (3d,3e) du transformateur (3) et qui comporte, dans une branche longitudinale, une diode de redressement (13) et un interrupteur (12), qui peut être commandé par un second régulateur (A6) qui règle la tension de sortie de l'autre circuit secondaire (A2,A3) et comporte, dans une branche transversale, une diode à effet unidirectionnel (14) et que, dans l'autre circuit secondaire (A2,A3), à la diode à effet unidirectionnel (14) est raccordé un circuit LC (15,17), dont le condensateur (17) forme une autre sortie du circuit convertisseur statique, et que les deux diodes (13,14) de l'autre circuit secondaire (A2,A3) sont polarisées respectivement de manière à être réunies directement (figure 2) ou indirectement (figure 1) par des bornes de même nom, et que le sens de bobinage de l'autre enroulement secondaire (3d,3e; 3da,3ea) est choisi respectivement de manière que l'autre circuit de sortie forme, conjointement avec le circuit primaire du convertisseur de blocage, un dispositif agencé à la manière d'un convertisseur à circulation.

2. Circuit convertisseur statique suivant la revendication 1, caractérisé par le fait
que l'interrupteur commandable (12) est réalisé sous la forme d'un transducteur.

# FIG 1

# FIG 2